Europäisches Patentamt

European Patent Office

Office européen des brevets

(11) Veröffentlichungsnummer: **0 286 785 B1**

(12) **EUROPÄISCHE PATENTSCHRIFT**

(45) Veröffentlichungstag der Patentschrift: **23.09.92**

(21) Anmeldenummer: **88101286.8**

(22) Anmeldetag: **29.01.88**

(51) Int. Cl.⁵: **B65B 3/32**

54 **Dosiervorrichtung für Flüssigprodukte.**

(30) Priorität: **10.04.87 DE 3712245**

(43) Veröffentlichungstag der Anmeldung:
**19.10.88 Patentblatt 88/42**

(45) Bekanntmachung des Hinweises auf die
Patenterteilung:
**23.09.92 Patentblatt 92/39**

(84) Benannte Vertragsstaaten:
**CH DE FR GB IT LI SE**

(56) Entgegenhaltungen:
**DE-A- 1 511 733**
**DE-A- 2 723 320**
**DE-A- 3 206 141**

(73) Patentinhaber: **Hamba-Maschinenfabrik Hans
A. Müller GmbH & Co KG
Buchenhofener Strasse 49
W-5600 Wuppertal 11(DE)**

(72) Erfinder: **Lingenhoff, Berthold
Am Bandsbusch 62
W-4010 Hilden(DE)**

(74) Vertreter: **Ostriga, Harald
Stresemannstrasse 6-8 Postfach 20 13 27
W-5600 Wuppertal 2(DE)**

## Beschreibung

Die Erfindung betrifft eine Dosiervorrichtung für Flüssigprodukte, wie sie entsprechend dem Oberbegriff des Patentanspruchs 1 durch die DE-A1 3 206 141 bekanntgeworden ist.

Die vorbekannte Dosiervorrichtung, ein Kolbendosierer, ist Bestandteil einer Abfüllvorrichtung für Molkereiprodukte, beispielsweise für Joghurt. Für jede sich in Förderrichtung erstreckende Becherbahn ist eine Dosiervorrichtung vorgesehen.

Die bekannte Dosiervorrichtung weist in parallelachsiger Nebeneinanderordnung einen Dosierzylinder und einen Ventilzylinder auf. Der Ventilzylinder ragt gegenüber dem unteren Dosierzylinderdeckel mit seinem Produktablauf zur Direktbefüllung je eines Bechers axial vor. Der untere Totraum des Dosierzylinders, den der Dosierkolben nur während der Reinigungsphase einnimmt, ist über einen sich radial erstreckenden Überströmkanal mit dem Innenraum des Ventilzylinders verbunden. Die Überströmöffnung befindet sich hierbei in einer Axialhöhe zwischen einer unteren und einer oberen Ventilkolben-Endlage. Das bekannte Ventil ist indes recht aufwendig, da es auf einer gemeinsamen Ventilkolbenstange zwei Ventilkolben enthält, die im Zusammenhang mit dem Dosiervorgang relevant sind. Der obere Ventilkolben arbeitet mit einem oberen axialen Ventilzylinderbereich und der untere Ventilkolben mit einem unteren axialen Ventilzylinderbereich zusammen.

Der Produktzulauf erfolgt bei der bekannten Dosiervorrichtung von oben her in den oberen axialen Ventilzylinderbereich hinein. Der Produktablauf schließt sich unterhalb des unteren axialen Ventilzylinderbereichs an. Der unterhalb der Vollfläche des Dosierkolbens angeordnete untere Dosierzylinder-Innenraum stellt - mit Ausnahme des vorerwähnten unteren Dosierzylinder-Totraums - das Dosiervolumen dar. Der oberhalb des Dosierkolbens befindliche obere Dosierzylinderraum ist nicht in den Produktfluß einbezogen und dient während der Reinigungsphase nur dem Zutritt der Reinigungsflüssigkeit, ist also ansonsten während des eigentlichen Dosiervorgangs funktionslos.

Ausgehend von der eingangs beschriebenen bekannten Dosiervorrichtung DE-A1- 3 206 141, liegt der Erfindung die Aufgabe zugrunde, eine Dosiervorrichtung einfacher und kompakter Bauweise zu schaffen, die außerdem den Vorteil einer Abfüllung ohne Lufteinschlüsse, insbesondere bei dickflüssigeren oder pastösen Produkten (z.B. bei Speisequark) gestattet. Diese Aufgabe ist entsprechend dem Kennzeichenteil des Patentanspruchs 1 gelöst worden.

Ein wichtiges Erfindungsmerkmal besteht zunächst darin, daß der Dosierkolben ein Ringkolben ist, welcher mit seiner inneren Ringkolbenfläche die zylindrische Außenmantelfläche des Ventilzylinders als innere Gleitfläche nutzt. Hierdurch erhält die erfindungsgemäße Dosiervorrichtung eine außen durchgehend glatte zylindrische Bauform, die bei entsprechender Höhendimensionierung ein besonders dichtes Nebeneinander gleichartiger Dosiervorrichtungen, insbesondere für eng nebeneinander angeordnete becherartige Vertiefungen (Formnester) von Form-, Füll- und Verschließmaschinen gestattet. Außerdem ergibt sich durch die erfindungsgemäß ineinandergeschachtelte Bauweise von Dosierzylinder und Ventilzylinder eine einfachere Bau- und Montageweise. Vereinfachend kommt hinzu, daß die erfindungsgemäße Dosiervorrichtung nur einen einzigen Ventilkolben benötigt.

Ein besonderer Vorteil der erfindungsgemäßen Dosiervorrichtung beruht auf dem Umstand, daß nicht nur Unter- und Oberseite des Ventilkolbens sondern sogar Unter- und Oberseite des Dosierkolbens vom Produkt beaufschlagt sind. Durch diese erfindungsgemäße Ausgestaltung ist es - ebenso wie beim Gegenstand der mit einem antriebslosen Dosierkolben arbeitenden DE-C2-30 12 978 - möglich geworden, das Produkt ruhig zu führen und ohne Lufteinschlüsse abzufüllen.

Eine besonders kompakte Bauweise ermöglicht die erfindungsgemäße Dosiervorrichtung insbesondere auch dadurch, daß sie unter Verzicht auf irgendwelche raumaufwendige Zuleitungen mit ihren oben offenen Stirnbereichen, d.h. mit dem oben offenen Ventilzylinderbereich und mit dem oben offenen Dosierzylinderbereich, unmittelbar in einer Produktablauföffnung unterhalb eines Produktbehälters angeordnet sein kann.

Weitere Erfindungsmerkmale ergeben sich aus zusätzlichen Unteransprüchen.

In den Zeichnungen sind bevorzugte Ausführungsbeispiele entsprechend der Erfindung näher dargestellt, es zeigen

Fig. 1 in mehr schematischer Darstellung einen Teilbereich aus dem Förderweg einer Form-, Füll-und Verschließmaschine, wobei eine Anzahl gleichartiger Dosiervorrichtungen hinter- und nebeneinander unmittelbar unterhalb eines Produktbehälters angeordnet sind,

Fig. 2 eine Teildarstellung gemäß Fig. 1, und zwar einer einzelnen Dosiervorrichtung, etwa entsprechend der in Fig. 1 mit II bezeichneten gestrichelten Einkreisung und

Fig. 3 eine einzelne Dosiervorrichtung, jedoch in einer gegenüber Fig. 2 abgeänderten Ausführungsform.

In den Zeichnungen sind Dosiervorrichtungen jeweils insgesamt mit der Bezugsziffer 10, 10a bezeichnet. Analoge bzw. in ihrer Funktion einander entsprechende Bauteile der Dosiervorrichtungen 10, 10a sind im folgenden soweit wie möglich mit identischen Bezugszeichen versehen.

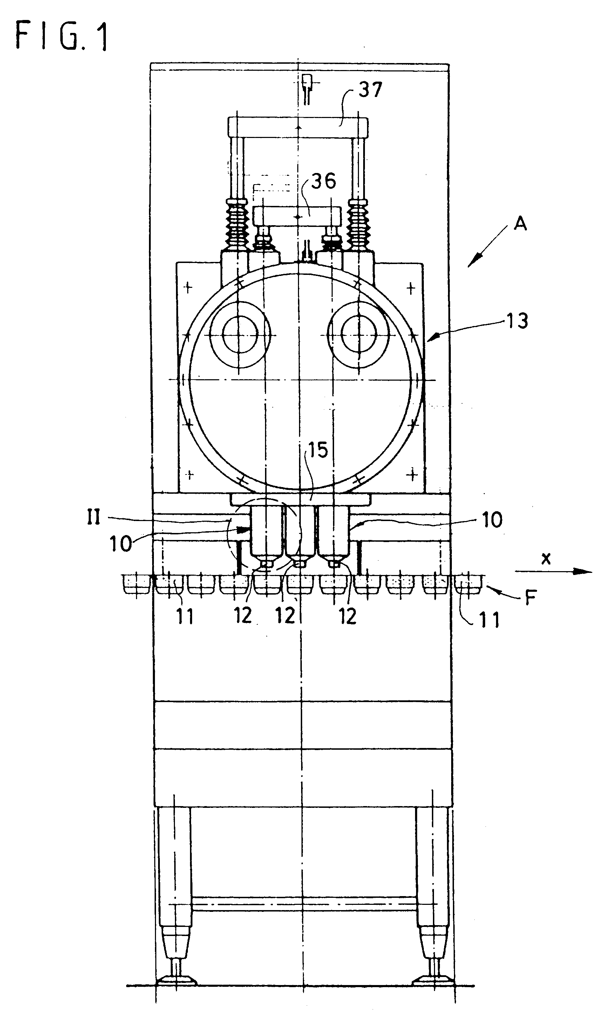

In Fig. 1 ist eine Abfülleinheit einer Form-, Füll- und Verschließmaschine insgesamt mit dem Buchstaben A bezeichnet. Es ist dort ein Längenabschnitt einer thermoplastischen Folie F gezeigt, welche in nicht dargestellter Weise im Tiefziehverfahren thermisch derart verformt ist, daß sie eine Vielzahl von hinter- und nebeneinander angeordneten becherartigen Formnestern 11 aufweist. Beim gezeigten Ausführungsbeispiel sind in fluchtender Anordnung mit den Nestern 11 drei mal drei Dosiervorrichtungen 10 im Quadrat etwa nach Art einer dichtesten Kugelpackung äußerst raumsparend hinter- und nebeneinander angeordnet. Die Förderrichtung der mit Formnestern 11 versehenen Folie F verläuft in Richtung x. Über die Produktablaufstutzen 12 der Dosiervorrichtungen 10 werden also innerhalb eines Taktes neun becherartige Formnester 11 gleichzeitig befüllt. Nach der Befüllung wird die Becherfolie F um die Teilung 3 in Förderrichtung x weitergetaktet. Jeder Füllvorgang bedingt bei jeder Dosiervorrichtung 10 eine genau dosierte Füllmenge.

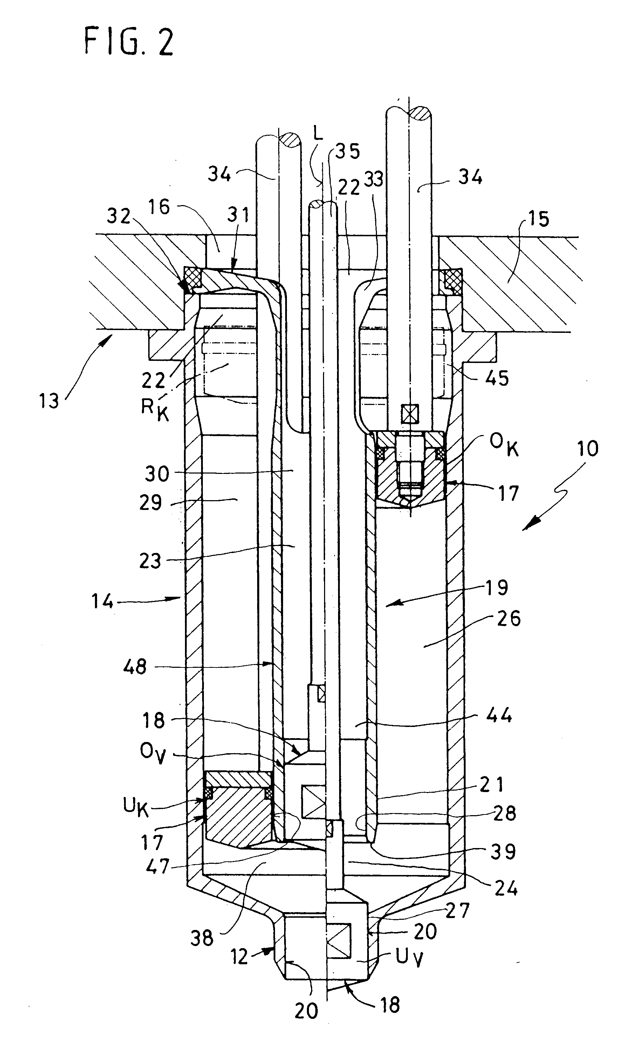

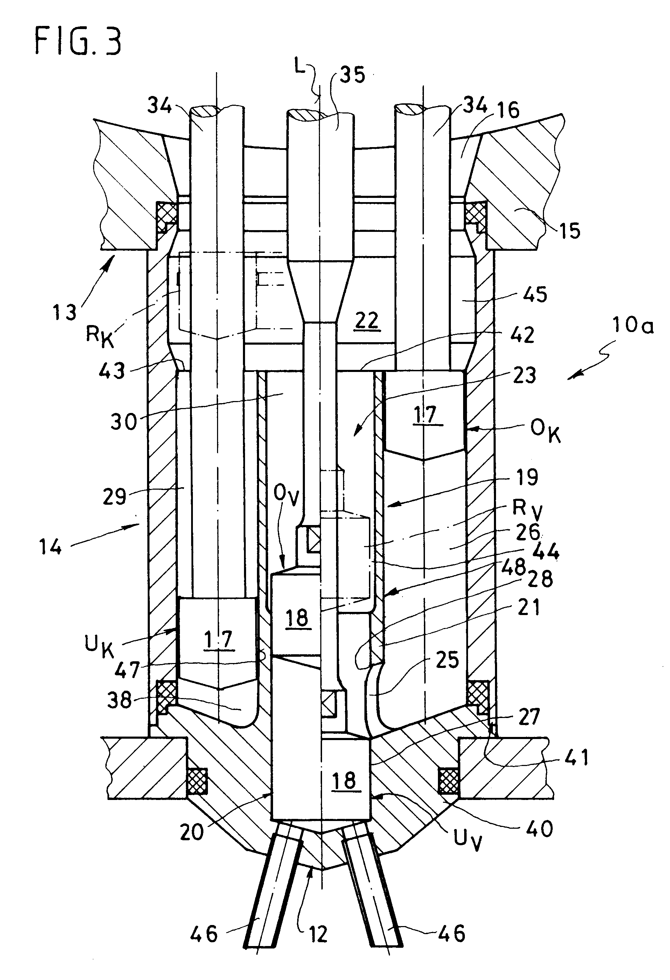

Die neuen Dosiervorrichtungen 10 sind im Boden 15 eines insgesamt mit 13 bezeichneten Produktbehälters gewissermaßen hängend angeordnet, wie später noch im wesentlichen anhand der Fig. 2 und 3 erläutert wird.

Gemäß den Fig. 2 und 3 sind die Dosierzylinder 14 der Dosiervorrichtungen 10, 10a jeweils in einem Boden 15 des Produktbehälters 13 innerhalb einer bodenseitigen Produktablauföffnung 16 dichtend befestigt.

Innerhalb des Dosierzylinders 14 ist ein als Ringkolben ausgebildeter Dosierkolben 17 auf- und abbeweglich angetrieben angeordnet.

Zur Vereinfachung der Darstellung sind sowohl der Ringkolben 17 als auch das zentral innerhalb eines Ventilzylinders 19 angeordnete ebenfalls auf- und abbeweglich angetriebene Kolbenventil 18 - nach Funktionsphasen getrennt - halbiert eingezeichnet. Und zwar sind die untere Endlage des Dosierkolbens 17 mit $U_K$, die obere Endlage des Dosierkolbens 17 mit $O_K$, die untere Endlage des Ventilkolbens 8 mit $U_V$ und die obere Endlage des Ventilkolbens 18 mit $O_V$ bezeichnet.

Der Aufbau der Dosiervorrichtungen 10, 10a läßt sich am besten im Zusammenhang mit deren Funktion erklären:

Während des Ansaughubes nimmt der Ventilkolben 18 zunächst seine untere Endlage $U_V$ unmittelbar oberhalb des Produktablaufstutzens 12 ein, der zugleich einen unteren axialen Ventilzylinderbereich 20 des Ventilzylinder 19 beeinhaltet.

Zu Beginn seines Ansaughubes befindet sich der Dosierkolben 17 in seiner unteren Endlage $U_K$. Während sich der Dosierkolben 17 in Richtung seiner oberen Endlage $O_K$ bewegt, saugt er durch die behälterseitige Produktablauföffnung 16 und über einen für Dosierzylinder 14 und Ventilzylinder 19 gemeinsamen Produktzulauf 22 das Produkt zentral durch den Ventilzylinder-Innenraum 23 nach unten und sodann über eine ringförmige Lücke 24 bzw. Überströmdurchbrüche 25 in den unteren dosierzylinderseitigen Dosierraum 26. Die ringförmige Lücke 24 bzw. die Überströmdurchbrüche 25 sind zwischen unterem axialen Ventilzylinderbereich 20 und dem oberem axialen Ventilzylinderbereich 21 angeordnet. Der Ansaughub währt so lange, bis der Dosierkolben 17 seine obere Endlage $O_K$ erreicht hat. Ist dies der Fall, fährt der Ventilkolben 18 hoch. Während nun der obere axiale Ventilkolbenbereich 27 den unteren axialen Bereich 28 des oberen axialen Ventilzylinderbereichs 21 um ein gewisses Maß überschnitten hat, beginnen die Überströmöffnungen 24 und 25 sich mit ihren unteren Bereichen zu öffnen, so daß der abwärts gerichtete Ausstoßhub des Dosierkolbens 17, also der eigentliche Dosierhub, beginnen kann.

Während des abwärts gerichteten Ausstoßhubes des Dosierkolbens 17 wird das flüssige Produkt durch die Überströmöffnungen 24, 25 unterhalb des sich in seiner oberen Endlage $O_V$ befindlichen Ventilkolbens 18 hinweg durch den unteren axialen Ventilzylinderbereich 20 und ggf. durch die Füllröhrchen 46 hindurch (Fig. 3) in das zu befüllende Behältnis (z.B. becherartiges Formnest 11 gemäß Fig. 1) befördert. Mit Erreichen seiner unteren Endlage $U_K$ hat der Dosierkolben 17 seinen Ausstoß- bzw. Füllhub beendet, d.h. die vorbestimmte Dosiermenge an das Behältnis abgegeben.

Zur Einleitung eines erneuten Ansaughubes fährt der Ventilkolben 18 nach unten in den unteren axialen Ventilzylinderbereich 20, worauf mit dem Ansaughub des Dosierkolbens 17 ein neuer Arbeitszyklus beginnt.

Zu erwähnen bleibt noch, daß während des Abwärtshubes des Dosierkolbens 17 selbstverständlich flüssiges Produkt über den gemeinsamen Produktzulauf 16, 22 in den oberen Zylinder- Innenraum 29 des Dosierzylinders 14 angesaugt wird. Ebenso ist der obere Ventilzylinder-Innenraum 30 ständig mit Produkt gefüllt. Auf diese Weise ist gewährleistet, daß über die Bewegung von Dosierkolben 17 und Ventilkolben 18 niemals Luft von außen in das Füllgut hineingelangt. Hierzu gehört es auch, daß bei dickflüssigem bis pastösem Füllgut Maßnahmen zweckmäßig sind, die ein Ansaugen von Luft beim Aufwärtshub des Ventilkolbens 18 verhindern. Dies kann beispielsweise dadurch geschehen, daß das Gesamtvolumen der Füllröhrchen 46, in welchen dickflüssiges Produkt nach dem Füllhub stehen bleibt, größer ist als das Hubvolumen innerhalb des unteren axialen Ventilzylinderbereichs 20, wodurch ein Luftzutritt verhindert wird.

Zur Ausgestaltung der Vorrichtung ist noch folgendes zu erwähnen:

Beim Ausführungsbeispiel gemäß Fig. 2 ist der Ventilzylinder 19 gewissermaßen frei hängend innerhalb des Dosierzylinders 14 angeordnet. Dies geschieht dadurch, daß der Ventilzylinder 19 einen oberen Befestigungs-Flansch 31 aufweist, welcher sich auf der oberen Stirnfläche 32 des Dosierzylinders 14 dichtend abstützt. Hierbei weist der Ventilzylinder-Befestigungsflansch 31 mehrere umfangsverteilte Durchbrüche 33 auf, welche sich bis in den oberen Axialbereich der Wandung des Ventilzylinders 19 hinein erstrecken. Die Durchbrüche 33 dienen zum einen der Fortleitung des flüssigen Produkts, gehören also insgesamt zum gemeinsamen Produktzulauf 22, ermöglichen aber andererseits einen axialen Durchtritt einer Kolbenstangen-Anordnung, die aus drei im Umfangswinkelabstand von 120° zueinander angeordneten Einzelstangen 34 besteht. Die zentral angeordnete Ventilkolbenstange ist mit der Bezugsziffer 35 versehen. Die Kolbenstangen 34, 35 erstrecken sich bis in den Produktbehälter 13 hinein und sind dort antriebsmäßig zusammengefaßt. Hierbei werden die Ventilkolbenstangen 35 über eine Jochanordnung 36 und die Dosierkolbenstangen 34 über eine Jochanordnung 37 mittels nicht gezeigter Antriebe auf- und abbewegt. Der Dosierkolbenhub ist in bekannter Weise zur Dosiervolumen-Änderung verstellbar.

Ventilzylinder 19 und Dosierzylinder 14 sind bezüglich einer gemeinsamen zentralen Längsmittelachse L koaxial zueinander angeordnet.

Der unterhalb des sich in seiner unteren Endlage $U_K$ befindlichen Dosierkolbens 17 vorhandene Zylinder-Innenraum ist als unterer Dosierzylinder-Totraum mit der Bezugsziffer 38 versehen. Die Überströmöffnungen 24, 25 befinden sich in axialer Höhe des unteren Dosierzylinder-Totraums 38. Gemäß Fig. 2 ist der untere Dosierzylinder-Totraum 38 durch eine Ebene begrenzt, welches durch die sich radial erstreckende untere Stirnfläche 39 des oberen Ventilzylinderbereichs 20 hindurchgeht (Fig. 2).

Im Unterschied zur Ausführungsform gemäß Fig. 3 ist bei der Ausführungsform gemäß Fig. 2 der den Ventilkolben 18 in seiner unteren Ventilkolbenendlage $U_V$ aufnehmende untere axiale Ventilzylinderbereich 20 mit dem Dosierzylinder 14 einstückig ausgebildet. Beim Ausführungsbeispiel gemäß Fig. 3 hingegen ist der Bereich 20 einstückig mit dem Ventilzylinder 19 ausgebildet. Der Ventilzylinder 19 weist hierbei einen unteren Befestigungsflansch 40 auf, welcher sich an der unteren Stirnfläche 41 des Dosierzylinders 14 insgesamt dichtend abstützt. Bei der Ausführungsform gemäß Fig. 3 ist der Ventilzylinder 19 praktisch frei nach oben ragend auf seinem Befestigungsflansch 40 angeordnet. Dieses derart, daß der Ventilzylinder 19 eine obere kreisförmige Öffnung 42 und der Dosierzylinder 14 eine obere kreisringförmige Zulauföffnung 43 bilden. Kreisförmige Zulauföffnung 42 und kreisförmige Zulauföffnung 43 befinden sich in derselben axialen Höhenebene bzw. Radialebene.

Die Dosiervorrichtungen 10, 10a gestatten auch eine vorteilhafte Durchströmung mit Reinigungsflüssigkeit: hierbei befinden sich der Ventilkolben 18 bei $R_V$ in einer Ventilzylinder-Erweiterung 44 und der Dosierkolben 17 bei $R_K$ in einer Dosierzylinder-Erweiterung 45.

Ergänzt werden muß noch, daß der Dosierkolben 17 mit seiner kreiszylindrischen Innenmantelfläche 47 auf der kreiszylindrischen Außenmantelfläche 48 des Ventilzylinders 19 läuft.

## Patentansprüche

1. Dosiervorrichtung (10, 10a) für Flüssigprodukte, insbesondere für dünnflüssige bis pastöse Molkerei- und Fettprodukte od.dgl., mit mindestens einem Kolbendosierer, dessen Dosierzylinder (14) jeweils einen zwischen einer oberen und einer unteren Endlage bewegbaren Dosierkolben (17) enthält, der einen oberen Zylinderraum (29) von einem unteren Dosierraum (26) flüssigkeitsdicht abtrennt, und mit einem Absperrorgan, welches innerhalb eines Ventilzylinders (19) mindestens einen zum Dosierkolben (17) parallelachsigen, zwischen einer oberen ($O_V$) und einer unteren ($U_V$) Ventilkolbenendlage bewegbaren Ventilkolben (18) aufweist, der in seiner einen Ventilkolbenendlage ($O_V$) bei Bewegung des Dosierkolbens (17) zu dessen unterer Endlage ($U_V$) hin den Strömungsweg zwischen Dosierraum (26) und Produktablauf (12) offenhält sowie den Zulauf des Produktes in den Dosierraum (26) sperrt, und der in seiner anderen Ventilkolbenendlage ($U_V$) bei umgekehrter Bewegung des Dosierkolbens (17) den Strömungsweg zwischen Dosierraum (26) und Produktzulauf (22) offenhält und den Produktablauf (12) sperrt, wobei der gegenüber dem Dosierzylinder (14) axial nach unten vorstehende, an seinem unteren Ende den Produktablauf (12) bildende Ventilzylinder (19) in einem Axialbereich zwischen unterer ($U_V$) und oberer ($O_V$) Ventilkolbenendlage eine zu einem unteren Dosierzylinder-Totraum (38) führende Überströmöffnung (24, 25) aufweist, dadurch gekennzeichnet, daß der Dosierkolben (17) ein Ringkolben ist, welcher mit seiner zylindrischen Innenmantelfläche (47) dichtend auf der zylindrischen Außenmantelfläche (48) des nur einen Ventilkolben (18) enthaltenden Ventilzylinders (19) läuft, daß der Ventilkolben (18) in seiner oberen Ventilkolbenendlage (O$_V$) den Strömungsweg zwischen dem Dosierraum (26) und dem Produktablauf (12) offenhält sowie den Zulauf des Produktes in den Dosierraum (26) sperrt und daß der jeweils dem Produktablauf (12) abgewendete obere Dosierzylinder-Innenraum (29) und der obere Ventilzylinder-Innenraum (30) an den Produktzulauf (16, 22) angeschlossen sind.

2. Dosiervorrichtung nach Anspruch 1, dadurch gekennzeichnet, daß Dosierzylinder (14) und Ventilzylinder (19) koaxial zueinander angeordnet sind.

3. Dosiervorrichtung nach Anspruch 1 oder nach Anspruch 2, dadurch gekennzeichnet, daß der obere Dosierzylinder-Innenraum (29) und der obere Ventilzylinder-Innenraum (30) einen gemeinsamen Produktzulauf (16, 22) aufweisen.

4. Dosiervorrichtung nach einem der Ansprüche 1 bis 3, dadurch gekennzeichnet, daß der Ventilzylinder (19) einen oberen Befestigungsflansch (31) aufweist, welcher sich auf der oberen Stirnfläche (32) des Dosierzylinders (14) abstützt.

5. Dosiervorrichtung nach Anspruch 4, dadurch gekennzeichnet, daß der obere Ventilzylinder-Befestigungsflansch (31) mindestens einen Durchbruch (33) für je eine Dosierkolbenstange (34) sowie für den Produktzulauf zum oberen Dosierzylinder-Innenraum (29) und zum oberen Ventilzylinder-Innenraum (30) aufweist.

6. Dosiervorrichtung nach Anspruch 4 oder 5, dadurch gekennzeichnet, daß zwischen dem den Ventilkolben (18) in seiner unteren Endlage (U$_V$) aufnehmenden axialen Ventilzylinderbereich (20) und dem den Ventilkolben (18) in seiner oberen Endlage (O$_V$) aufnehmenden axialen Ventilzylinderbereich (21) eine ringförmige Lücke (24) besteht, die oberseitig von einer sich radial erstreckenden unteren Stirnfläche (39) des oberen Ventilzylinderbereichs (21) begrenzt ist.

7. Dosiervorrichtung nach Anspruch 6, dadurch gekennzeichnet, daß eine Ebene durch die sich radial erstreckende untere Stirnfläche (39) des oberen axialen Ventilzylinderbereichs (21) den unteren Dosierzylinder-Totraum (38) nach oben hin begrenzt.

8. Dosiervorrichtung nach Anspruch 6 oder 7, dadurch gekennzeichnet, daß der den Ventilkolben (18) in seiner unteren Ventilkolbenendlage (U$_V$) aufnehmende untere axiale Ventilzylinderbereich (20) mit dem Dosierzylinder (14) einstückig ausgebildet ist.

9. Dosiervorrichtung nach einem der Ansprüche 1-8, insbesondere nach den Ansprüchen 1-3, dadurch gekennzeichnet, daß der Ventilzylinder (19) einen unteren Befestigungsflansch (40) aufweist, welcher sich an der unteren Stirnfläche (41) des Dosierzylinders (14) abstützt.

10. Dosiervorrichtung nach Anspruch 9, dadurch gekennzeichnet, daß zwischen dem den Ventilkolben (18) in seiner unteren Endlage (U$_V$) aufnehmenden axialen Ventilzylinderbereich (20) und dem den Ventilkolben (18) in seiner oberen Endlage (O$_V$) aufnehmenden oberen axialen Ventilzylinderbereich (21) mehrere umfangsverteilte Durchbrüche (25) als Überströmöffnungen in der Wandung des Ventilzylinders (19) vorgesehen sind.

11. Dosiervorrichtung nach Anspruch 9 und 10, dadurch gekennzeichnet, daß der Ventilzylinder (19) frei nach oben ragend auf dem unteren Ventilzylinder-Befestigungsflansch (40) steht, derart, daß der Ventilzylinder (19) eine obere kreisförmige (42) und der Dosierzylinder (14) eine obere kreisringförmige (43) Zulauföffnung in derselben Radialebene bilden.

12. Dosiervorrichtung nach einem der Ansprüche 1-11, gekennzeichnet durch eine mit ihren oberen offenen Stirnbereichen (22, 42, 43) unmittelbar in einer Produktablauföffnung (16) im Boden (15) eines Produktbehälters (13) angeordnete Dosiervorrichtung (10, 10a).

**Claims**

1. A dosing device (10, 10a) for liquid products, in particular for thin to paste-like dairy and fatty products or the like, comprising at least one piston-type dosing device, the dosing cylinder (14) of which contains a respective dosing piston (17) which is moveable between an upper and a lower end position and which separates an upper cylinder chamber (29) from a lower dosing chamber (26) so as to prevent the penetration of liquids, and comprising a shut-off member which, inside a valve cylinder (19), comprises at least one valve piston (18) which extends axially in parallel to the dosing piston (17), is moveable between an upper valve piston end position (O$_V$) and a lower valve piston end position (U$_V$) and which, in its first valve piston end position (O$_V$), when the dosing piston (17) moves towards its lower end position ($U_V$), keeps open the flow path between the dosing chamber (26) and the product outlet (12) and blocks the inflow of the product into the dosing chamber (26) and which, in its other valve piston end position ($U_V$), in the case of the reverse movement of the dosing piston (17), keeps open the flow path between the dosing chamber (26) and the product inlet (22) and blocks the product outlet (12), where the valve cylinder (19), which projects axially downwards in relation to the dosing cylinder (14) and at its lower end forms the product outlet (12), comprises, in an axial zone between the lower valve piston end position ($U_V$) and the upper valve piston end position ($O_V$), an overflow opening (24, 25) leading to a lower dosing cylinder dead space (38), characterised in that the dosing piston (17) is an annular piston, the cylindrical inner surface (47) of which slides in tightly fitting fashion over the cylindrical outer surface (48) of the valve cylinder (19) which contains only one valve piston (18), that the valve piston (18), in its upper valve piston end position ($O_V$), keeps open the flow path between the dosing chamber (26) and the product outlet (12) and blocks the inflow of the product into the dosing chamber (26), and that the upper dosing cylinder inner chamber (29), which in each case faces away from the product outlet (12), and the upper valve cylinder inner chamber (30) are connected to the product inlet (16, 22).

2. A dosing device as claimed in Claim 1, characterised in that the dosing cylinder (14) and the valve cylinder (19) are arranged coaxially with one another.

3. A dosing device as claimed in Claim 1 or Claim 2, characterised in that the upper dosing cylinder inner chamber (29) and the upper valve cylinder inner chamber (30) possess a common product inlet (16, 22).

4. A dosing device as claimed in one of Claims 1 to 3, characterised in that the valve cylinder (19) comprises an upper fixing flange (31) which bears against the upper end face (32) of the dosing cylinder (14).

5. A dosing device as claimed in Claim 4, characterised in that the upper valve cylinder fixing flange (31) comprises at least one opening (33) for a respective dosing piston rod (34) and for the product inflow to the upper dosing cylinder inner chamber (29) and to the upper valve cylinder inner chamber (30).

6. A dosing device as claimed in Claim 4 or 5, characterised in that an annular gap (24) is present between the axial valve cylinder zone (20), which accommodates the valve piston (18) in its lower end position ($U_V$), and the axial valve cylinder zone (21), which accommodates the valve piston (18) in its upper end position ($O_V$), which gap (24) is upwardly delimited by a radially extending, lower end face (39) of the upper valve cylinder zone (21).

7. A dosing device as claimed in Claim 6, characterised in that a plane through the radially extending, lower end face (39) of the upper axial valve cylinder zone (21) upwardly delimits the lower dosing cylinder dead space (38).

8. A dosing device as claimed in Claim 6 or 7, characterised in that the lower axial valve cylinder zone (20), which accommodates the valve piston (18) in its lower valve piston end position ($U_V$), forms an integral part of the dosing cylinder (14).

9. A dosing device as claimed in one of Claims 1 to 8, in particular as claimed in Claims 1 to 3, characterised in that the valve cylinder (19) comprises a lower fixing flange (40) which bears against the lower end face (41) of the dosing cylinder (14).

10. A dosing device as claimed in Claim 9, characterised in that between the axial valve cylinder zone (20), which accommodates the valve piston (18) in its lower end position ($U_V$), and the upper axial valve cylinder zone (21), which accommodates the valve piston (18) in its upper end position ($O_V$) a plurality of peripherally distributed openings (25) are provided as overflow openings in the wall of the valve cylinder (19).

11. A dosing device as claimed in Claims 9 and 10, characterised in that the valve cylinder (19) is arranged on the lower valve cylinder fixing flange (40) projecting freely upwards, in such manner that the valve cylinder (19) forms an upper circular inlet opening (42) and the dosing cylinder (14) forms an upper circular ring-shaped inlet opening (43) in the same radial plane.

12. A dosing device as claimed in one of Claims 1 to 11, characterised by a dosing device (10, 10a), the upper, open end zones (22, 42, 43) of which are arranged directly in a product outlet opening (16) in the base (15) of a product container (13).

## Revendications

1. Dispositif de dosage (10, 10a) pour produits fluides, notamment pour produits laitiers et produits gras ou équivalents, de consistance très fluide à pâteuse, comprenant au moins un doseur à piston dont le cylindre de dosage (14) renferme un piston de dosage (17) pouvant se déplacer entre une position extrême supérieure et une position extrême inférieure, qui sépare à joint étanche aux liquides un espace de cylindre supérieur (29) d'un espace de dosage inférieur (26), et un organe obturateur qui présente, à l'intérieur du cylindre de vanne (19), au moins un piston de vanne (18) dont l'axe est parallèle à celui du piston de dosage (17) et qui peut se déplacer entre une position extrême supérieure $(O_V)$ et une position extrême inférieure $(U_V)$, lequel piston, placé dans une $(O_V)$ de ses positions extrêmes, lors du mouvement du piston de dosage (17) vers sa position extrême inférieure $(U_V)$, maintient ouverte la voie d'écoulement entre l'espace de dosage (26) et la sortie de produit (12) et obture l'arrivée du produit dans l'espace de dosage (26), tandis que, placé dans son autre position extrême $(U_V)$, lors du mouvement inverse du piston de dosage (17), il maintient ouverte la voie d'écoulement entre l'espace de dosage (26) et l'arrivée de produit (22) et obture la sortie de produit (12), cependant que le cylindre de vanne (19), qui se prolonge axialement vers le bas au-delà du cylindre de dosage (14), et qui forme la sortie de produit (12) à son extrémité inférieure, présente dans une région axiale comprise entre la position extrême inférieure $(U_V)$ et la position extrême supérieure $(O_V)$ du piston de vanne, une ouverture de passage (24, 25) qui mène à un espace mort inférieur (38) du cylindre de dosage, caractérisé en ce que le piston de dosage (17) est un piston annulaire qui coulisse à joint étanche, par sa surface latérale intérieure cylindrique (47), sur la surface latérale extérieure cylindrique (48) du cylindre de vanne (19) qui renferme un piston de vanne (18), en ce que le piston de vanne (18), placé dans sa position extrême supérieure $(O_V)$, maintient ouverte la voie d'écoulement entre l'espace de dosage (26) et la sortie de produit (12) et obture l'arrivée du produit dans l'espace de dosage (26), et en ce que l'espace intérieur supérieur (29) du cylindre de dosage, qui est le plus éloigné de la sortie de produit (12) et l'espace intérieur supérieur (30) du cylindre de vanne sont raccordés à l'arrivée de produit (16, 22).

2. Dispositif de dosage selon la revendication 1,

caractérisé en ce que le cylindre de dosage (14) et le cylindre de vanne (19) sont disposés coaxialement l'un à l'autre.

3. Dispositif de dosage selon la revendication 1 ou selon la revendication 2, caractérisé en ce que l'espace intérieur supérieur (29) du cylindre de dosage et l'espace intérieur supérieur (30) du cylindre de vanne présentent une arrivée de produit commune (16, 22).

4. Dispositif de dosage selon une des revendications 1 à 3, caractérisé en ce que le cylindre de vanne (19) présente une collerette de fixation supérieure (31) qui prend appui sur la surface frontale supérieure (32) du cylindre de dosage (14).

5. Dispositif de dosage selon la revendication 4, caractérisé en ce que la collerette de fixation supérieure (31) du cylindre de vanne présente au moins une ouverture de passage (33) pour une tige de piston de dosage (34) ainsi que pour l'arrivée du produit dans l'espace intérieur supérieur (29) du cylindre de dosage, et vers l'espace intérieur supérieur (30) du cylindre de vanne.

6. Dispositif de dosage selon la revendication 4 ou 5, caractérisé en ce qu'il subsiste entre la région axiale (20) du cylindre de vanne qui reçoit le piston de vanne (18) dans sa position extrême inférieure $(U_V)$ et la région axiale (21) du cylindre de vanne qui reçoit le piston de vanne (18) dans sa position extrême supérieure $(O_V)$, une ouverture libre annulaire (24) qui est limitée, en haut, par une surface frontale inférieure radiale (39) de la région supérieure (21) du cylindre de vanne.

7. Dispositif de dosage selon la revendication 6, caractérisé en ce qu'un plan qui passe par la surface frontale inférieure radiale (39) de la région axiale supérieure (21) du cylindre de vanne limite vers le haut l'espace mort intérieur (38) du cylindre de dosage.

8. Dispositif de dosage selon la revendication 6 ou 7, caractérisé en ce que la région axiale inférieure (20) du cylindre de vanne reçoit le piston de vanne (18) dans sa position extrême inférieure $(U_V)$ est réalisé en une seule pièce avec le cylindre de dosage (14).

9. Dispositif de dosage selon une des revendications 1 à 8, notamment selon les revendications 1 à 3,
caractérisé en ce que le cylindre de vanne (19) présente une collerette de fixation inférieure (40) qui prend appui contre la surface frontale inférieure (41) du cylindre de dosage (14).

10. Dispositif de dosage selon la revendication 9, caractérisé en ce qu'entre la région axiale (20) du cylindre de vanne qui reçoit le piston de vanne (18) dans sa position extrême inférieure ($U_V$) et la région axiale supérieure (21) du cylindre de vanne qui reçoit le piston de vanne (18) dans sa position extrême supérieure ($O_V$), il est prévu dans la paroi du cylindre de vanne (19) plusieurs ajours de passage (25) réparties sur la circonférence, qui servent d'ouvertures de passage.

11. Dispositif de dosage selon les revendications 9 et 10,
caractérisé en ce que le cylindre de vanne (19) s'élève librement sur la collerette de fixation inférieure (40) du cylindre de vanne, de telle sorte que le cylindre de vanne (19) forme une ouverture d'arrivée supérieure circulaire (42) et le cylindre de dosage (14) forme une ouverture d'arrivée supérieure (43) en forme de couronne de cercle, ces ouvertures étant placées dans le même plan radial.

12. Dispositif de dosage selon une des revendications 1 à 11,
caractérisé par un dispositif de dosage (10, 10a), dont les régions frontales ouvertes supérieures (22, 42, 43) sont disposées directement dans l'ouverture de sortie de produit ménagée dans le fond (15) d'un réservoir de produit (13).

# F I G. 1

# FIG. 2

FIG.3